(19) **Europäisches Patentamt / European Patent Office / Office européen des brevets**

(11) **EP 2 857 732 B1**

(12) # EUROPEAN PATENT SPECIFICATION

(45) Date of publication and mention
of the grant of the patent:
**29.08.2018 Bulletin 2018/35**

(21) Application number: **13801131.7**

(22) Date of filing: **03.06.2013**

(51) Int Cl.:
*F16L 11/08* (2006.01)    *F16L 11/12* (2006.01)
*B32B 5/02* (2006.01)     *B32B 5/04* (2006.01)
*B32B 5/12* (2006.01)     *B32B 1/08* (2006.01)
*B32B 15/02* (2006.01)    *B32B 3/08* (2006.01)

(86) International application number:
**PCT/JP2013/065360**

(87) International publication number:
**WO 2013/183589 (12.12.2013 Gazette 2013/50)**

(54) **MARINE HOSE**

UNTERWASSERSCHLAUCH

TUYAU MARIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.06.2012 JP 2012126845**

(43) Date of publication of application:
**08.04.2015 Bulletin 2015/15**

(73) Proprietor: **The Yokohama Rubber Company,
Limited
Tokyo 105-8685 (JP)**

(72) Inventors:
• **TAMADA, Yoshinori
Hiratsuka-shi
Kanagawa 254-8601 (JP)**
• **ONO, Shunichi
Hiratsuka-shi
Kanagawa 254-8601 (JP)**

(74) Representative: **Dilg, Haeusler, Schindelmann
Patentanwaltsgesellschaft mbH
Leonrodstrasse 58
80636 München (DE)**

(56) References cited:
**EP-A2- 2 290 278        WO-A1-2011/074126
WO-A1-2011/074126    GB-A- 2 406 368
JP-A- H0 211 989        JP-A- 2000 018 444
US-A1- 2004 170 791**

• **DATABASE WPI Week 199009 Thomson
Scientific, London, GB; AN 1990-061576
XP002752402, & JP H02 11989 A (YOKOHAMA
RUBBER CO LTD) 17 January 1990 (1990-01-17)**
• **DATABASE WPI Week 200014 Thomson
Scientific, London, GB; AN 2000-157950
XP002752403, & JP 2000 018444 A
(BRIDGESTONE CORP) 18 January 2000
(2000-01-18)**

Printed by Jouve, 75001 PARIS (FR)

## Description

TECHNICAL FIELD

The present invention relates to a marine hose, and more specifically relates to a double carcass type marine hose with greatly improved shock absorption performance of the outer side carcass layer group, with reduced weight and lower cost.

BACKGROUND

So-called double carcass type marine hoses in which a plurality of reinforcing layers that includes an inner side carcass layer group and an outer side carcass layer group laminated between an inner surface rubber layer and a cover rubber layer are widely used (for example, see Patent Document 1 and Document 2). The inner side carcass layer group and the outer side carcass layer group are configured by laminating a plurality of carcass layers formed from organic fiber cords or the like. In a double carcass-type marine hose, even if the inner side carcass layer group is damaged, provided the outer side carcass layer group is intact, it is possible to prevent leakage of fluid that has leaked from the inner side carcass layer group to the outside of the hose by the outer side carcass layer group.

When the inner side carcass layer group is damaged, the inner pressure acting on the outer side carcass layer group may suddenly increase, so the outer side carcass layer group must have a shock-resistant specification for this type of occurrence. Therefore, conventionally, the outer side carcass layer group has been configured by laminating an appropriate number of carcass layers, and it has been difficult to reduce that number of laminated layers. This has been one factor preventing reduction in weight and cost of marine hoses.

Alternatively, in order to absorb the shock produced by the damage to the inner side carcass layer group, a shock absorbing layer configured from a foam material such as sponge or the like may be provided between the inner side carcass layer group and the outer side carcass layer group. A marine hose of this specification, provided with a shock absorbing layer, is disadvantageous for reducing the weight and cost of the marine hose.

PRIOR ART DOCUMENTS

Patent Documents Patent Document 1: Japanese Unexamined Patent Application Publication No. H11-82844A
Patent Document 2: WO 2011/074126 A1

SUMMARY OF THE INVENTION

Problems to be Solved by the Invention

It is an object of the present invention to provide a double carcass-type marine hose with greatly improved shock absorption performance of the outer side carcass layer group, with reduced weight and lower cost.

Means to Solve the Problem

The marine hose to achieve the above object is a double carcass type marine hose having a plurality of reinforcing layers that include an inner side carcass layer group and an outer side carcass layer group laminated between an inner surface rubber layer and an outer rubber layer, wherein nylon 66 cords with a ply structure are used as carcass cords from which the outer side carcass layer group is configured, the breaking elongation of the carcass cords is not less than 30% and the strength is not less than 5.9 cN/dtex, and the upper twist coefficient K calculated from the following equation (1) is not less than 1000 and not more than 3100, where the cord fineness is D (dtex) and the upper twist count is T (No./10 cm).

$$K = T \times D^{1/2} \ldots \qquad (1)$$

Effect of the invention

According to the marine hose of the present invention, nylon 66 cords with a ply structure are used as carcass cords from which the outer side carcass layer group is configured, the breaking elongation of the carcass cords is not less than 30% and the strength is not less than 5.9 cN/dtex, and the upper twist coefficient K calculated from $K = T \times D^{1/2}$

is not less than 1000 and not more than 3100, where the cord fineness is D (dtex) and the upper twist count is T (No./10 cm). In other words, by using high elongation and high strength nylon 66 as the carcass cords, the shock absorption performance of the outer side carcass layer group can be greatly increased.

As a result, it is possible to reduce the number of laminations of the carcass layer from which the outer side carcass layer group is configured. Alternatively, it is possible to achieve a specification in which a shock absorbing layer is not provided or a specification in which the shock absorbing layer is thinner compared with a conventional specification. In this way, a marine hose with reduced weight and lower cost can be achieved.

Also, the carcass cords have a ply structure which provides excellent buckling resistance, and the upper twist coefficient K is set in the appropriate range (K = 1000 to 3100), so it is possible to further improve the buckling resistance while suppressing the reduction in strength of the outer side carcass layer group. In this way, even under severe conditions, the outer side carcass layer group can be sufficiently durable in practical use.

BRIEF DESCRIPTION OF THE DRAWINGS

FIG. 1 is an overall schematic view illustrating an embodiment of the marine hose according to the present invention.
FIG. 2 is a cutaway view illustrating the carcass layers of the outer side carcass layer group of the marine hose in FIG. 1.
FIG. 3 is a partial cross-sectional view illustrating the internal structure of the marine hose in FIG. 1.
FIG. 4 is a partial cross-sectional view illustrating a modified example of the internal structure of the marine hose in FIG. 1.
FIG. 5 is a partial cross-sectional view illustrating the internal structure of the cover rubber layer.
FIG. 6 is a perspective view of the cover rubber layer illustrating an arrangement of the constraining layer.
FIG. 7 is a perspective view of the cover rubber layer of FIG. 5 provided with a display device on the surface thereof.
FIG. 8 is a perspective view of the cover rubber layer illustrating the display device in FIG. 7 in a deformed state;
FIG. 9 is a perspective view of the cover rubber layer illustrating the arrangement of the constraining layer.
FIG. 10 is a perspective view of the cover rubber layer of FIG. 9 provided with a display device on the surface thereof.
FIG. 11 is a front view of the cover rubber layer illustrating the display device in FIG. 10 in a deformed state.
FIG. 12 is a perspective view of the cover rubber layer illustrating an arrangement of the constraining layer.
FIG. 13 is a perspective view of the cover rubber layer of FIG. 12 provided with a display device on the surface thereof.
FIG. 14 is a front view of the cover rubber layer illustrating the display device in FIG. 13 in a deformed state.

BEST MODE FOR CARRYING OUT THE INVENTION

The following is a description of the marine hose according to the present invention based on embodiments illustrated in the drawings.

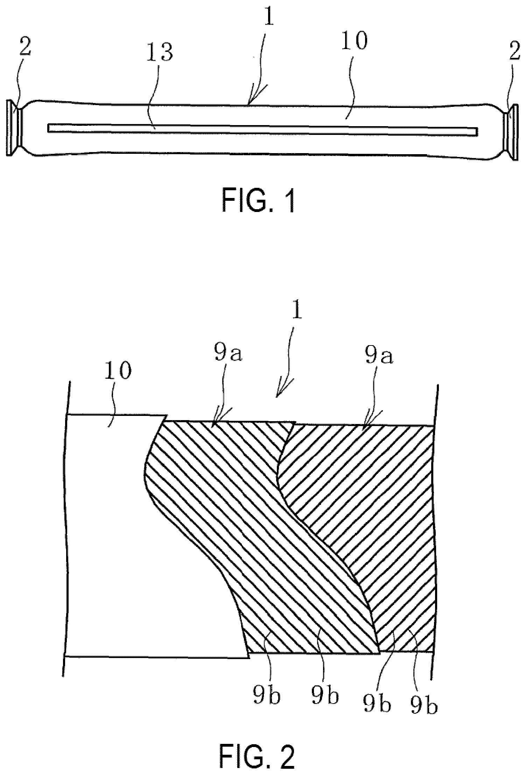

As illustrated in FIGS. 1 to 3, a marine hose 1 according to the present invention is a double carcass type in which a plurality of reinforcing layers that includes an inner side carcass layer group (first inner side carcass layer group 5 and second inner side carcass layer group 7) and an outer side carcass layer group 9 is laminated between an inner surface rubber layer 3 and a cover rubber layer 10. The inner peripheral side of the inner surface rubber layer 3 is a flow path 4 for fluid such as crude oil or the like.

In this embodiment, a visible display device 13 extending in the hose axial direction is provided on the outer surface of the cover rubber layer 10. The display device 13 has a conspicuous color such as white or fluorescent color or the like. The display device 13 is not limited to only one, but a plurality may be provided.

A spiral wire layer 6 is provided between the first inner side carcass layer group 5 and the second inner side carcass layer group 7. The spiral wire layer 6 is configured from wire wound spirally around the outer peripheral surface of the first inner side carcass layer group 5. The first inner side carcass layer group 5, the second inner side carcass layer group 7, the spiral wire layer 6, and the outer side carcass layer group 9 are reinforcing layers. There may be one inner side carcass layer group, and the spiral wire layer 6 can be provided as desired.

The outer side carcass layer group 9 is configured from a plurality of laminated carcass layers 9a. The number of laminations is, for example, about from 4 to 20. Each of the carcass layers 9a is formed by laying a plurality of carcass cords 9b in parallel disposed inclined at a predetermined angle with respect to the hose axial direction. Carcass layers 9a that are laminated adjacent to each other are disposed with the carcass cords 9b thereof intersecting each other.

The surface of each of the carcass layers 9a is covered with a thin rubber layer for adhesion, and adjacent carcass layers 9a contact each other via the thin rubber layers. Also, the outer peripheral surface of the outer side carcass layer group 9 and the inner peripheral surface of the cover rubber layer 10 are in contact and bonded to each other. Also, the inner peripheral surface of the outer side carcass layer group 9 and the outer peripheral surface of the second inner side carcass layer group 7 are in contact and bonded to each other via thin rubber layers for adhesion.

The first inner side carcass layer group 5 and the second inner side carcass layer group 7 are configured from a plurality of laminated carcass layers 5a, 7a respectively. The number of laminations is, for example, about from 4 to 30. Each of the carcass layers 5a, 7a is formed by laying a plurality of carcass cords in parallel disposed inclined at a predetermined angle with respect to the hose axial direction. Carcass layers 5a, 7a that are laminated adjacent to each other are disposed with the carcass cords intersecting each other. Cords made from polyester, polyketone, aramid, vinylon, nylon, or the like that are normally used in marine hose are used as the carcass cords to form the carcass layers 5a, 7a.

The surface of each of the carcass layers 5a, 7a is covered with a thin rubber layer for adhesion, and adjacent carcass layers contact each other via the thin rubber layers for adhesion. The inner peripheral surface of the first inner side carcass layer group 5 and the outer peripheral surface of the inner surface rubber layer 3 are in contact and bonded to each other.

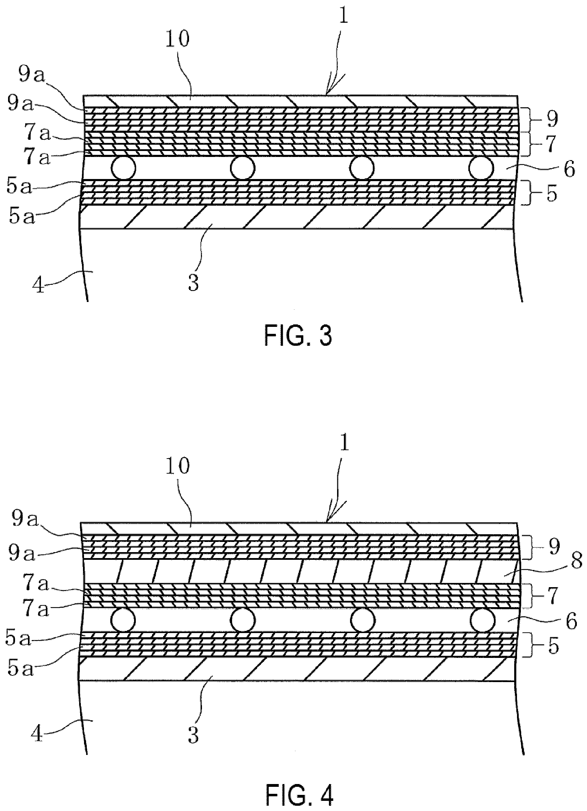

In this embodiment, a shock absorbing layer is not provided, but a shock absorbing layer 8 can be provided between the second inner side carcass layer group 7 and the outer side carcass layer group 9, as in an embodiment illustrated in FIG. 4. The shock absorbing layer 8 is configured from a foam material such as sponge or the like. The inner peripheral surface and the outer peripheral surface of the shock absorbing layer 8 are in contact and bonded to the outer peripheral surface of the second inner side carcass layer group 7 and the inner peripheral surface of the outer side carcass layer group 9, respectively, via thin rubber layers for adhesion. The rest of the specification is the same as for the previous embodiment.

In the present invention, the carcass cords 9b from which the outer side carcass layer group 9 is configured have a special specification. Nylon 66 cords having a ply structure are used as the carcass cords 9b. Also, the breaking elongation of the carcass cords 9b is not less than 30%, and the break strength is not less than 5.9 cN/dtex. The upper limit value of the breaking elongation is about 40%, and the upper limit value of the break strength is about 7.1 cN/dtex.

The upper twist coefficient K calculated from the following equation (1) is not less than 1000 and not more than 3100, where the fineness of the cords is D (dtex) and the upper twist count of the cords is T (No./10 cm).

$$K = T \times D^{1/2} \dots \qquad\qquad (1)$$

The carcass cords 9b have a ply structure in which a plurality of nylon 66 filament strands are each given a lower twist in the same direction, then, these filament strands that have been given the lower twist are given an upper twist together in the opposite direction. The filament strand given the lower twist is not limited to a single strand, but a plurality may each be given the lower twist in the same direction. Also, a plurality of strands may be given the upper twist. The preferred structure of the carcass cords 9b is 2100 dtex / 1/2 twist count about 30 No./cm.

The ply structure carcass cords 9b can provide good buckling resistance, compared with single twist structure in which one or a plurality of filaments is laid out and twisted in one direction only. The lower twist and the upper twist can have different twist counts, but to obtain stability, preferably, the count is the same or approximately the same.

The greater the twist coefficient K of the upper twist, the greater the reduction in the tensile strength of the carcass cords 9b, and the better the resistance to buckling. Therefore, in the present invention, the upper twist coefficient K is set to not less than 1000 and not more than 3100, to further increase the buckling resistance, while minimizing the reduction in strength of the outer side carcass layer group 9. In this way, even under severe conditions, the outer side carcass layer group 9 can be sufficiently durable in practical use.

In order to apply an adhesion treatment to the carcass cords from which the carcass layers 5a, 7a, 9a are configured, an adhesive liquid is applied, then the cord is passed in the longitudinal direction thereof through a dry zone, a heat set zone, and a normalizing zone in that order, while applying a predetermined tensile load. The adhesive process for the carcass cords from which the carcass layers 5a, 7a are configured are set to the normal conditions used for the carcass layers of marine hose. For the adhesive process of the carcass cords 9b from which the carcass layer 9a is configured, only the tensile force in the normalizing zone is set to a special condition.

Namely, in the normalizing zone, a tensile force of not less than 0.063 g/dtex and not more than 0.200 g/dtex is applied to the carcass cords 9b from which the carcass layer 9a is configured. The normally applied tensile force is about 0.86 g/dtex to 1.43 g/dtex, so in the present invention, a significantly lower tensile force is applied.

The tensile force in the normalizing zone has a greater effect on the elongation of the cords after the adhesive process compared with the other conditions of the adhesive process. By appropriately setting the tensile force in the present invention, nylon 66 cords (carcass cords 9b) are obtained with breaking elongation of not less than 30% and strength of not less than 5.9 cN/dtex.

The conditions of the adhesive process of the carcass cords 9b from which the carcass layer 9a is configured are as follows, for example. In the dry zone, the tensile force is from 0.15 g/dtex to 0.35 g/dtex, the temperature is from 120°C to 150°C, and the processing time is from one minute 30 seconds to three minutes. In the heat set zone, the tensile force is from 0.07 g/dtex to 0.59 g/dtex, the temperature is from 200°C to 230°C, and the processing time is from 30 seconds to one minute. In the normalizing zone, the tensile force is from 0.063 g/dtex to 0.200 g/dtex, the temperature is from 200°C to 230°C, and the processing time is from 30 seconds to one minute.

In the present invention, nylon 66 cords, with a special specification as described above with higher elongation and higher strength compared with conventional cords, are used as the carcass cords 9b from which the outer side carcass layer group 9 is configured, so the shock absorption performance of the outer side carcass layer group 9 is greatly improved. As a result, even if the inner side carcass layer groups 5, 7 are damaged and fluid flows out and the inner pressure acting on the outer side carcass layer group 9 suddenly increases, the outer side carcass layer group 9 can resist the shock at that time. Therefore, it is possible to reduce the number of laminations of the carcass layer 9a from which the outer side carcass layer group 9 is configured. Alternatively, in the case of the specification where the shock absorbing layer 8 is provided as in the embodiment illustrated in FIG. 4, the specification of the shock absorbing layer 8 can be thinner compared with the conventional case. As a result, it is possible to reduce the weight and reduce the cost of the marine hose 1.

Also, by using the carcass cords 9b with a ply structure having excellent buckling resistance, and setting the twist coefficient K of the upper twist in the appropriate range (K = 1000 to 3100), it is possible to further improve the buckling resistance while suppressing the reduction in strength of the outer side carcass layer group 9. In this way, even under severe conditions, the outer side carcass layer group 9 can be sufficiently durable in practical use.

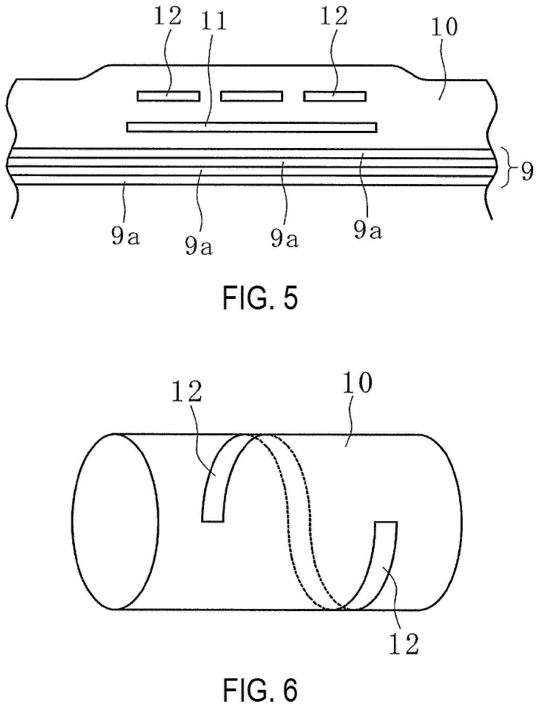

The visible display device 13 is provided extending in the hose axial direction on the outer surface of the cover rubber layer 10, and as illustrated in FIG. 5, the constraining layer 12 whose elongation is smaller than that of the rubber of the cover rubber layer 10 can be provided within the cover rubber layer 10 extending in the hose circumferential direction and bonded to the rubber of the cover rubber layer 10. The display device 13 is specified to be disposed at a position corresponding to near an end portion in the hose circumferential direction of the constraining layer 12.

In FIG. 5, a sliding-surface layer 11 is embedded within the cover rubber layer 10 over at least a portion of the range over which the display device 13 is provided and at least the outer peripheral surface thereof is not bonded to the cover rubber layer 10. In addition, the constraining layer 12 extends in the hose circumferential direction over a portion of the range on the outer peripheral side of the sliding-surface layer 11.

For example a polyester film or the like can be used in the sliding-surface layer 11. The outer peripheral surface only of the sliding-surface layer 11 may be specified to be unbonded to the cover rubber layer 10, or both the inner peripheral surface and the outer peripheral surface of the sliding-surface layer 11 may be specified to be unbonded to the cover rubber layer 10.

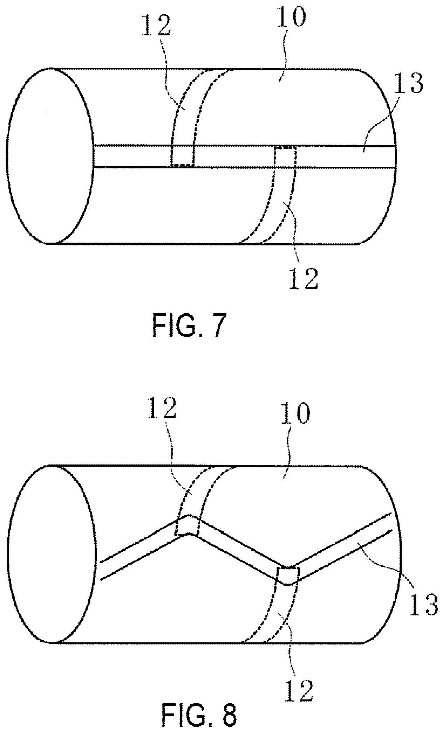

For example, organic fiber cords such as aramid fiber, polyketone fiber, polyphenylene sulfide fiber, or the like can be used in the constraining layer 12. Also, a plurality of cords can be laid in parallel extending in the hose circumferential direction. As illustrated in FIGS. 6 and 7, for example, the constraining layer 12 is embedded in a spiral form in the cover rubber layer 10.

If the inner side carcass layer groups 5, 7 are damaged and fluid flows out, the inner pressure acting on the outer side carcass layer group 9 suddenly increases. In the present invention, the carcass cords 9b of the outer side carcass layer group 9 extend greatly compared with conventional cords, even at low inner pressures. Therefore, even when there is a small increase in inner pressure (even when a small quantity of fluid has flown from the inner side carcass layer groups 5, 7), the cover rubber layer 10 can deform greatly. In that case, in the portion where the constraining layer 12 is embedded, the elongation in the hose circumferential direction of the cover rubber layer 10 is restricted. On the other hand, in the portion where the constraining layer 12 is not embedded, the elongation in the hose circumferential direction of the cover rubber layer 10 is not restricted.

Therefore, a difference in elongation of the cover rubber layer 10 is produced near the end portions in the hose circumferential direction of the constraining layer 12. As a result, a change is produced in the display device 13 which is disposed at a position corresponding to near the end portions in the hose circumferential direction of the constraining layer 12 due to the difference in elongation of the cover rubber layer 10, as illustrated in FIG. 8. By viewing the display device 13, it is possible to determine that damage has occurred to the inner side carcass layer groups 5, 7 and that the inner pressure acting on the outer side carcass layer group 9 has increased, even if by only a little.

When the sliding-surface layer 11 is provided as illustrated in FIG. 5, separation occurs between the outer peripheral surface of the sliding-surface layer 11 and the portion opposite this outer peripheral surface. When damage occurs to the inner side carcass layer groups 5, 7 and the inner pressure acting on the outer side carcass layer group 9 suddenly increases, the portion on the outer peripheral side of the sliding-surface layer 11 is not restricted from sliding and moving on the outer peripheral surface of the sliding-surface layer 11. Also, the elongation in the hose circumferential direction of the cover rubber layer 10 at the portion where the constraining layer 12 is embedded is restricted, while sliding and moving on the outer peripheral surface of the sliding-surface layer 11. On the other hand, the elongation in the hose circumferential direction of the cover rubber layer 10 at the portions where the constraining layer 12 is not embedded is not restricted, while sliding and moving on the outer peripheral surface of the sliding-surface layer 11. As a result, near the end portion in the hose circumferential direction of the constraining layer 12, a major increase in the elongation of the cover rubber layer 10 is produced, compared with when the sliding-surface layer 11 is not provided. As a result, the change in the display device 13 can be increased.

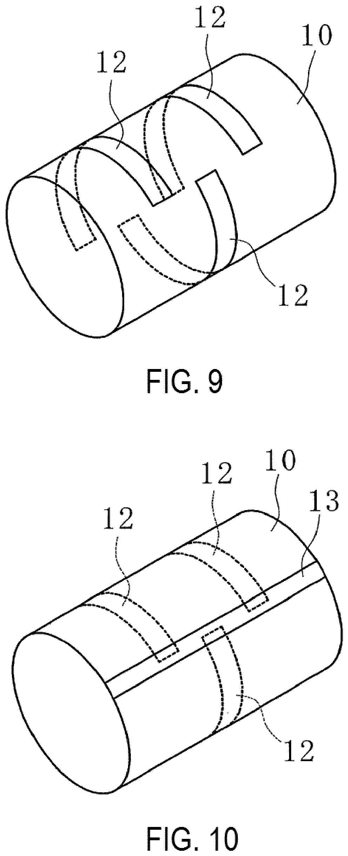

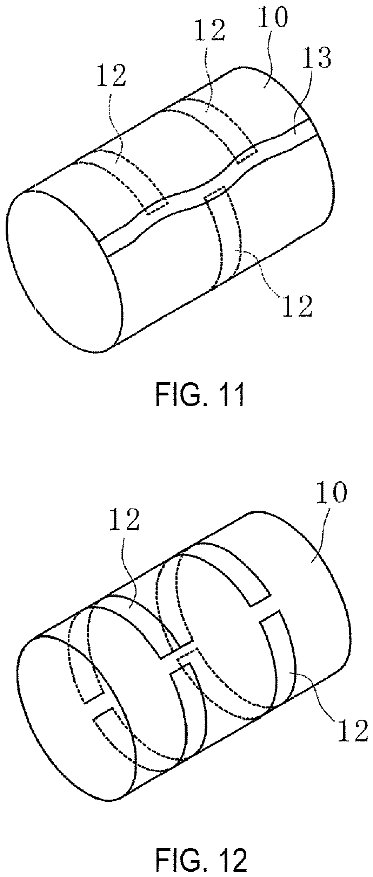

As illustrated in FIGS. 9 and 10, a plurality of the constraining layers 12 whose length is about half the outer periphery of the marine hose 1 can be disposed at intervals along the hose axial direction. Adjacent constraining layers 12 are disposed on portions of the circumference opposite to each other, and the display device 13 is specified to be disposed at a position corresponding to near the end portions in the hose circumferential direction of the constraining layers 12. In the case of this specification, when the inner side carcass layer groups 5, 7 are damaged and the fluid flows out and the inner pressure acting on the outer side carcass layer group 9 suddenly increases, a change is produced in the display device 13 as illustrated in FIG. 11.

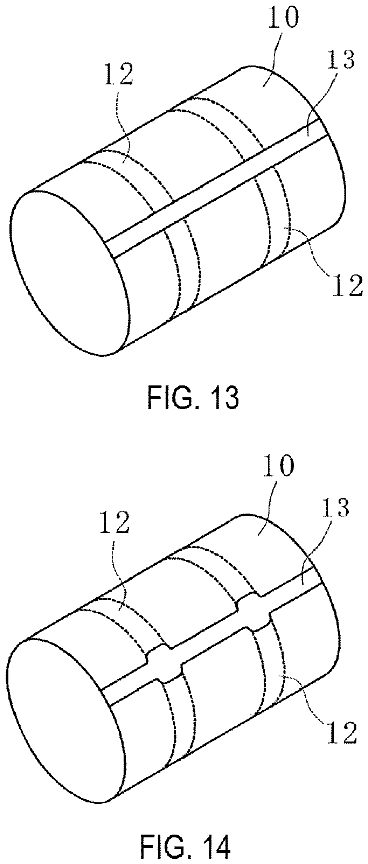

As illustrated in FIGS. 12 and 13, a plurality of constraining layers 12 can be disposed divided in the hose circumferential direction. The display device 13 is specified to be disposed at a position corresponding to near an end portion in the hose circumferential direction of the constraining layer 12. In the case of this specification, when the inner side carcass layer groups 5, 7 are damaged and the fluid flows out and the inner pressure acting on the outer side carcass layer group 9 suddenly increases, a change is produced in the display device 13 as illustrated in FIG. 14.

EXAM PLES

Eight types of marine hose with the internal structure illustrated in FIG. 3 (Working Examples 1 to 3, and Comparative Examples 1 to 5) were produced with carcass cords having different properties by varying only the tensile force condition in the normalizing zone (N zone) of the carcass cords of the outer side carcass layer group, as shown in Table 1. The twisted structure of the carcass cords of the outer side carcass layer group was a ply structure in which a plurality of nylon 66 filament strands were each given a lower twist in the same direction, next, the filament strands that had been given the lower twist were given an upper twist together in the opposite direction with approximately the same twist count (No./m), and the twist count was in a range of 15/m to 24/m. The adhesive process conditions of the carcass cords from which the carcass layers of the outer side carcass layer group was configured were: dry zone tensile force of 0.18 g/dtex, temperature of 140°C, and processing time of 86 seconds; heat set zone tensile force of from 0.07 g/dtex to 0.59 g/dtex, temperature of 230°C, and processing time of 43 seconds; and normalizing zone temperature of 225°C, and processing time of 43 seconds.

The visible display device was provided on each marine hose on the outer surface of the cover rubber layer extending in the hose axial direction, the sliding surface layer whose outer peripheral surface was not bonded to the cover rubber layer 10 was embedded within the cover rubber layer 10 as illustrated in FIG. 5, and the constraining layer extended in the hose circumferential direction over a portion of the range on the outer peripheral side of the sliding surface layer. As illustrated in FIGS. 6 and 7, the display device was disposed in a position corresponding to near the end portion in the hose circumferential direction. For each marine hose, the change in the display device and the shock absorption were evaluated, and the results are shown in Table 1.

[Change in the Display Device] It was checked whether when an inner pressure of 0.39 MPa was applied to the outer side carcass layer group, any change in the display device could be visually observed. When a change was observed, it was recorded as "changed", and when a change was not observed, it was recorded as "no change".

[Shock Absorption]

The value of the upper limit of inner pressure that would cause no practical problem when applied to the outer side carcass layer group was measured. When the upper limit value of the inner pressure was from 3.9 MPa to 4.9 MPa it was recorded as "○" indicating excellent, and when it exceeded 4.9 MPa, it was recorded as "◎" indicating particularly excellent. In the table, × indicates that the outer side carcass layer group became damaged before reaching an inner pressure of 3.9 MPa.

[Table 1]

| | | Working Examples | | | Comparative Example | | | | |
|---|---|---|---|---|---|---|---|---|---|
| | | 1 | 2 | 3 | 1 | 2 | 3 | 4 | 5 |
| Cord tensile force in the N zone (g/dtex) | | 0.099 | 0.063 | 0.200 | 0.378 | 0.050 | 0.210 | 0.200 | 0.063 |
| Cord properties | Cord force (N/each) | 335 | 310 | 334 | 335 | 303 | 334 | 335 | 295 |
| | Cord strength (cN/dtex) | 6.4 | 5.9 | 6.7 | 7.1 | 5.7 | 6.7 | 7.6 | 5.5 |
| | breaking elongation (%) | 34.9 | 35.7 | 30.2 | 22.6 | 37.5 | 28.7 | 29.1 | 36.3 |
| | D: cord fineness (dtex) | 5230 | 5254 | 4985 | 4714 | 5320 | 4983 | 4400 | 5320 |
| | T: Upper twist count (No./10 cm) | 33 | 34 | 31 | 33 | 34 | 31 | 15 | 42 |
| | K: Upper twist coefficient | 2387 | 2465 | 2189 | 2266 | 2480 | 2188 | 995 | 3063 |
| Performance of outer side carcass | Change in surface display device | Changed | Changed | Changed | No change | Changed | No change | No change | Changed |
| | Shock absorption performance | ◎ | ○ | ◎ | × | × | × | ○ | × |

EP 2 857 732 B1

From the results in Table 1, it can be seen that Working Examples 1 to 3 had excellent shock absorption performance of the outer side carcass layer group compared with Comparative Examples 1 to 3 and 5. Also, in Working Examples 1 to 3, it can be seen that it was possible to see a change in the display device even when a small inner pressure (0.39 MPa) was acting.

REFERENCE NUMERALS

| 1 | Marine hose |
| 2 | Splicing fitting |
| 3 | Inner surface rubber layer |
| 4 | Flow path |
| 5 | First inner side carcass layer group |
| 5a | Carcass layer |
| 6 | Spiral wire layer |
| 7 | Second inner side carcass layer group |
| 7a | Carcass layer |
| 8 | Shock absorbing layer |
| 9 | Outer side carcass layer group |
| 9a | Carcass layer |
| 9b | Carcass cord |
| 10 | Cover rubber layer |
| 11 | Sliding-surface layer |
| 12 | Constraining layer |
| 13 | Display device |

**Claims**

1.  A double carcass-type marine hose comprising:

   a plurality of reinforcing layers that include an inner side carcass layer group; and
   an outer side carcass layer group laminated between an inner surface rubber layer and a cover rubber layer; wherein
   nylon 66 cords with a ply structure are used as carcass cords from which the outer side carcass layer group is configured;
   the breaking elongation of the carcass cords is not less than 30 % and the strength is not less than 5.9 cN/dtex; and
   the upper twist coefficient K calculated from the following equation (1) is not less than 1000 and not more than 3100, where the cord fineness is D (dtex) and the upper twist count is T (No./10 cm):

$$K = T \times D^{1/2} \qquad\qquad (1)$$

2.  The marine hose according to claim 1, wherein
   a visible display device extending in a hose axial direction is provided on the outer surface of the cover rubber layer, a constraining layer whose elongation is smaller than that of the rubber of the cover rubber layer is disposed within the cover rubber layer bonded to the rubber thereof and extending in the hose circumferential direction, and the display device is disposed in a position corresponding to near the end portion in the hose circumferential direction of the constraining layer.

3.  The marine hose according to claim 2, wherein
   a sliding-surface layer that is not bonded to the cover rubber layer on at least the outer peripheral surface thereof is embedded within the cover rubber layer over at least a portion of the range where the display device is provided, and the constraining layer extends in the hose circumferential direction over a portion of the range on the outer peripheral side of the sliding-surface layer.

4.  The marine hose according to claim 2 or 3, wherein
the constraining layer is embedded in the cover rubber layer in a spiral form.

5.  The marine hose according to any one of claims 1 to 4, wherein
the outer peripheral surface of the inner side carcass layer group contacts the inner peripheral surface of the outer side carcass layer group.

**Patentansprüche**

1.  Doppelkarkassen-Marineschlauch, umfassend:

    mehrere Verstärkungsschichten, die eine Innenseitenkarkassenschichtgruppe;
    und eine Außenseitenkarkassenschichtgruppe, die zwischen einer Innenoberflächengummischicht und einer Gummideckschicht laminiert ist, einschließen; wobei
    Nylon-66-Cordfäden mit einer Lagenstruktur als Karkassen-Cordfäden verwendet werden, aus denen die Außenseitenkarkassenschichtgruppe konfiguriert ist;
    die Bruchdehnung der Karkassen-Cordfäden nicht weniger als 30% beträgt und die Festigkeit nicht weniger als 5,9 cN/dtex beträgt; und
    der obere Verdrillungskoeffizient K, der aus der folgenden Gleichung (1) berechnet wird, nicht weniger als 1000 und nicht mehr als 3100 beträgt, wobei die Cordfeinheit D (dtex) ist und die obere Verdrillungszahl T (Anzahl/10 cm) ist:

$$K = T \times D^{1/2} \quad (1)$$

2.  Marineschlauch nach Anspruch 1, wobei
eine sichtbare Anzeigevorrichtung, die in Schlauchaxialrichtung verläuft, auf der Außenoberfläche der Gummideckschicht bereitgestellt ist, eine Begrenzungsschicht, deren Ausdehnung kleiner ist als die des Gummis der Gummideckschicht, innerhalb der Gummideckschicht angeordnet ist, gebunden an den Gummi davon und in Schlauchumfangsrichtung verlaufend, und die Anzeigevorrichtung in einer Position angeordnet ist, die nahezu dem Endabschnitt in Schlauchumfangsrichtung der Begrenzungsschicht entspricht.

3.  Marineschlauch nach Anspruch 2, wobei
eine Gleitoberflächenschicht, die an mindestens der Außenumfangsoberfläche davon nicht an die Gummideckschicht gebunden ist, über mindestens einen Abschnitt des Bereichs, in dem die Anzeigevorrichtung bereitgestellt ist, innerhalb der Gummideckschicht eingebettet ist und die Begrenzungsschicht in Schlauchumfangsrichtung über einen Abschnitt des Bereichs an der Außenumfangsseite der Gleitoberflächenschicht verläuft.

4.  Marineschlauch nach Anspruch 2 oder 3, wobei
die Begrenzungsschicht spiralförmig in die Gummideckschicht eingebettet ist.

5.  Marineschlauch nach einem der Ansprüche 1 bis 4, wobei
die Außenumfangsoberfläche der Innenseitenkarkassenschichtgruppe die Innenumfangsoberfläche der Außenseitenkarkassenschichtgruppe berührt.

**Revendications**

1.  Tuyau marin de type à double carcasse comprenant :

    une pluralité de couches de renfort qui comportent un groupe de couches de carcasse côté interne ; et
    un groupe de couches de carcasse côté externe stratifié entre une couche de caoutchouc de surface interne et une couche de caoutchouc de couverture ; dans lequel
    des cordes de nylon 66 avec une structure de nappe sont utilisées comme cordes de carcasse à partir desquelles est configuré le groupe de couches de carcasse côté externe ;
    l'allongement à la rupture des cordes de carcasse n'est pas inférieur à 30 % et la résistance n'est pas inférieure à 5,9 cN/dtex ; et

le coefficient de torsion supérieure K calculé à partir de l'équation (1) suivante n'est pas inférieur à 1000 et pas supérieur à 3100, où D (dtex) représente la finesse de la corde et T (N°/10 cm) représente le nombre de torsions supérieures :

$$K = T \times D^{1/2} \qquad (1)$$

2. Tuyau marin selon la revendication 1, dans lequel
un dispositif d'affichage visible s'étendant dans une direction axiale du tuyau est prévu sur la surface externe de la couche de caoutchouc de couverture, une couche de contrainte dont l'allongement est inférieur à celui du caoutchouc de la couche de caoutchouc de couverture est disposée à l'intérieur de la couche de caoutchouc de couverture liée au caoutchouc de celle-ci et s'étendant dans la direction circonférentielle du tuyau, et le dispositif d'affichage est disposé dans une position correspondant au voisinage de la partie d'extrémité dans la direction circonférentielle du tuyau de la couche de contrainte.

3. Tuyau marin selon la revendication 2, dans lequel
une couche de surface de glissement qui n'est pas liée à la couche de caoutchouc de couverture sur au moins la surface périphérique externe de celle-ci est logée à l'intérieur de la couche de caoutchouc de couverture sur au moins une partie de la plage où est prévu le dispositif d'affichage, et la couche de contrainte s'étend dans la direction circonférentielle du tuyau sur une partie de la plage sur le côté périphérique externe de la couche de surface de glissement.

4. Tuyau marin selon la revendication 2 ou 3, dans lequel
la couche de contrainte est logée dans la couche de caoutchouc de couverture selon une forme en spirale.

5. Tuyau marin selon l'une quelconque des revendications 1 à 4, dans lequel
la surface périphérique externe du groupe de couches de carcasse côté interne entre en contact avec la surface périphérique interne du groupe de couches de carcasse côté externe.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**EP 2 857 732 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1182844 A
- WO 2011074126 A1